# EUROPEAN PATENT APPLICATION

(11) **EP 2 428 678 A1**
(43) Date of publication of application: **14.03.2012**
(21) Application number: 11007386.3
(22) Date of filing: 12.09.2011
(51) Int. Cl.: F03D 11/00

(54) **Electronic module and method used for fitting a light beacon on the blade tip**

(30) Priority: 14.09.2010 ES 201001185
(71) Applicant: Gamesa Innovation & Technology, S.L., 31621 Sarriguren (ES)
(72) Inventor: Arocena de La Rua, Ion, 31621 Sarriguren (ES); Candela Garolera, Anna, 31621 Sarriguren (ES); Sanz Pascual, Eneko, 31621 Sarriguren (ES); Sanchis Gurpide, Pablo, 31621 Sarriguren (ES)

(57) **Abstract**

The electronic module (7) for the light beacon on the blade tip is integrated into a lighting system consisting of a power supply (3) located in the rotor (2), a fiber optic transmission system (4) that extends along the length of the blade (1), a converter (5) and a light emitting module (6). The electronic module comprises a power circuit and a control circuit, located at the blade tip (1) and encapsulated for protection against lightning strikes.

The operating method of the electronic module (7) selects the blade (1) lighting during the ON interval corresponding to the 120° of the top rotation area, and keeps it switched off and receiving energy during the OFF interval corresponding to the bottom rotation area.

## Description

### Object of the invention

This invention refers on the one hand to the electronic device used to emit a certain light intensity at the tip of a wind turbine blade, and on the other hand to the method used to reduce the required power that needs to be transported by the transmission system in order to power a light emitting module located at the blade tip.

### Background of the invention

The blade tips of wind turbines located in areas with air traffic need to be fitted with a light beacon. When they are lit, the aircraft can visually identify the blades and avoid the obstacles.

To power the tip of a blade, a blade light beacon system is used, consisting of a power supply usually placed in the rotor hub, a transmission system consisting of a conductive element that extends longitudinally along the length of the blade, and a light emitting module that lights the blade tip. Several known techniques exist for lighting. The energy source can be electric energy or light energy (such as the light emission produced by a laser), the cable can be an electrical conductive element or fiber optic, and the blade tip lighting module can consist of lamps or LED diodes. If a light beam is used as a power supply, a light-to-voltage converter must be included before the light emitting module.

This applicant has been granted a patent, P200800345, which presents a lighting module consisting of a power supply in the hub (according to the preferential embodiment, a laser), a transmission system comprising a conductive element to transport the light energy provided by emitter, and a light-to-voltage converter to power the light emitting module located at the blade tip. Fiber optic is used for the light energy transmission system.

However, the light intensity developed at the blade tip depends on the power that can be transported across the transmission system. Since wind turbines are becoming increasingly large, the long distances from the hub to the blade tip can make it difficult to properly power the light emitting module at the tip. The fiber optic used in the aforementioned patent is a means of transmission commonly used for transmitting data and its power transmission capacity is low, even more so when compared with that of an electrical conductor. If the low transmission performance is combined with the tens of meters existing between the emission and reception points, as well as the possible inclusion of intermediate connectors arranged along the length of the blade, the capacity of fiber optic for transmitting power is even lower and can constitute a limitation for the development of the system.

In order to reduce the cost of the power supply for the tip light emitting module, the invention's electronic module has been designed and a method has been developed for transmitting sufficient light intensity to the beacon system.

### Description of the invention

One object of the invention is to use an electronic circuit located between the transmission system and the light emitting module in order to reduce the power transported by the transmission system, in this specific case consisting of fiber optic, to power the tip module.

Another object of the invention is to provide each of the blades with sufficient lighting power to meet the lighting requirements, and also to ensure that the tip module is only lit during the 120° in which the blade is in the top position.

In turn, another object of the invention is for the electronic module to be capable of storing the power which is not consumed by the tip module during the 240° in which the blade tip is not in the top position, and use this energy to increase the power available in the light emitting module during the 120° in which the blade is in the top position.

And finally, another object of the invention is to provide the unit with a control circuit in which the current switch is controlled (depending on whether the blade is in the top or bottom position) from the signal of a sensor located in the wind turbine hub, using the fiber optic along which the power is transmitted to also enable communication between the sensor and the switch.

All this is achieved with an electronic circuit based on an electrical condenser, a controlled switch and a control terminal, in such a way that the condenser positioned between the input terminals of the electronic module is charged when the light emitting module is switched off while in the bottom area, and is discharged and powers the light emitting module when the blade is in the top position.

The signal applied to the control terminal that controls the change-of-state switch comes from a sensor. The sensor can be a blade position sensor located in the hub or in the blade tip electronic circuit. In the first case, the light signal with which power is provided to the system can also be used as a setpoint signal, through a flashing or pulse code that the control terminal of the tip module electronic circuit uses to change the switch's state.

The main advantage of this new design is the reduction in the required power that must flow through the transmission system of the blade light beacon, enabling the use of fiber optic to remotely power the tip module and the use of a power supply providing less power than that required to light an equivalent tip module.

### Brief description of the drawings

The following figures are provided in order to explain the composition of the electronic module and the method used for powering this module:
Figure 1 shows an embodiment of a known lighting module positioned on a blade.
Figure 2 shows a schematic view of the electronic module positioned between the converter and the light emitting module.
Figure 3 shows a complete wind turbine, depicting the operation of the lighting modules positioned at the blade tips.

### Description of the preferential embodiment

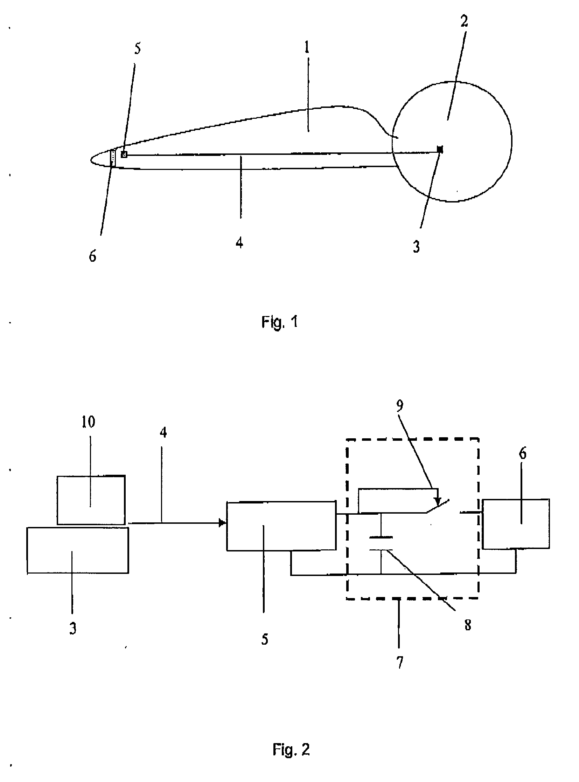

As shown in Figure 1, the wind turbine blade (1) is attached to the rotor hub (2). The rotor hub (2) is the place selected for placing the power supply (3) of the light beam that will light the blade tip (1). The light beam, preferably laser, will travel along the length of the blade (1) through the transmission system (4) to the light-to-voltage converter (5). This converter is in charge of converting the light signal to an electrical signal that powers the light emitting module (6) positioned at the tip.

In order for the light emitting module (6) to have sufficient power to meet the lighting requirements despite the low performance of fiber optic as a means of transmission (4), an electronic module (7) is positioned between the converter (5) and the light emitting module (6), shown in Figure 2. This electronic module (7) has two distinct parts: a power circuit and a control circuit.
- The power circuit receives the power supply input from the output of the light-to-voltage converter (5), and its output goes to the light emitting module (6). A condenser (8) capable of storing electric power is connected in parallel to the aforementioned power supply input and output. This is completed with a controlled switch (9) that enables or disables the aforementioned power circuit.
- The control circuit includes a pulse sensor (11) at the output of the light-to-voltage converter (5) which, as a result of the pulses in the converter's output, controls the opening or closing of the controlled switch (9).

In addition to the two aforementioned circuits, the electronic module (7) has other electronic components (Zener diodes, resistors, etc.) for adjusting the voltage level at the input of the light emitting module (6) and regulating the discharge time of the condenser (8).

The electronic module (7) is encapsulated for protection against lightning strikes.

The operating method of the electronic module (7) is controlled by the readings taken by the pulse sensor (11). The module's off or on signal is determined based on the measurement of the rotor position provided by the sensor placed in the hub (10). This sensor instructs the power supply (3) to emit one or more light pulses (flashing code of the laser beam) which are transmitted by the transmission system (4) and generate flashing in the output of the light-to-voltage converter, which is detected by the pulse sensor (11). The pulse detector acts on the switch (9), which opens during the OFF interval to charge the condenser (8) and closes during the ON interval to power the light emitting module (6) with the energy stored in the condenser. During this period, the condenser's loss of charge caused by the powering of the light emitting module is offset partially with the power that is still received from the light-to-voltage converter (5).

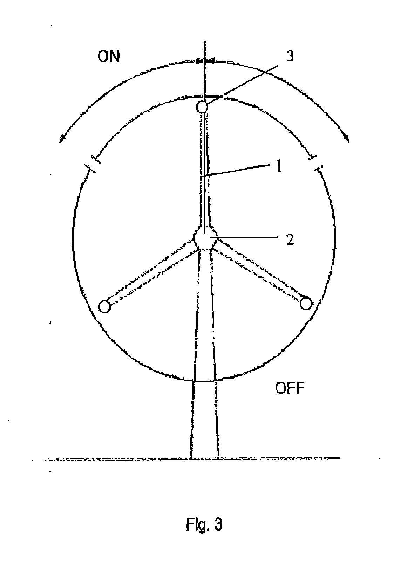

As shown in Figure 3, the switch control provides two intervals, ON and OFF. Thus, the light emitting module (6) at the tip of the blade (1) is switched on at least during the 120° in which the blade (1) is in the top position (ON interval), and is switched off during the 240° in which the blade is not in its top position (OFF interval). Moreover, during the OFF interval, the power which is not consumed by the light emitting module (6) is stored in a condenser (not shown in Figure 3).

## Claims

1. Electronic module for a wind turbine blade tip beacon system that is added to a lighting system consisting of a power supply (3), a fiber optic transmission system (4), a light-to-voltage converter (5) and a light emitting module (6), characterized because:
- it consists of a power circuit comprising at least one condenser (8) and a switch (9),
- a control circuit controls the switch (9) according to a signal originating in a position sensor (10),
- it is positioned between the output of the light-to-voltage converter (5) and the input of the light emitting module (6),
- and it is encapsulated for protection against lightning strikes.

2. Electronic module for a light beacon fitted at the blade tip, according to claim 1, characterized because the position sensor (10) is located in the wind turbine hub and generates a signal which is transferred via fiber optic, constituting the transmission system (4), and is detected at the output of the light-to-voltage converter (5) with a sensor (11) which acts on the switch (9).

3. Electronic module for a light beacon fitted at the blade tip, according to claim 2, characterized because the signal of the position sensor (10) consists of a series of pulses in the light flow emitted by the power supply (3).

4. Method used for fitting a light beacon at the blade tip, characterized because a position sensor (10) controls the switch (9) so that the light emitting module (6) is powered during the ON interval and the power supply is cut off during the OFF interval.

5. Method used for fitting a light beacon at the blade tip, according to claim 4, characterized because during the OFF interval the condenser (8) is charged, and during the ON interval the energy stored in the condenser (8) is used to power the light emitting module (6).

6. Method used for fitting a light beacon at the blade tip, according to claim 4, characterized because the ON interval corresponds to the 120° in which any of the blades (1) is in the top position, and the OFF interval corresponds to the 240° in which the blade (1) is in the bottom position.
